# EUROPEAN PATENT APPLICATION

(11) **EP 2 505 800 A1**
(43) Date of publication of application: **03.10.2012**
(21) Application number: 11160384.1
(22) Date of filing: 30.03.2011
(51) Int. Cl.: F01N 3/022, F01N 3/28

(54) **Unit for reducing the emission of pollutants contained in the exhaust gas of an internal combustion engine**

(71) Applicant: Scambia Industrial Developments AG, 9494 Schaan (LI)
(72) Inventor: The designation of the inventor has not yet been filed
(74) Representative: Bohest AG

(57) **Abstract**

A unit (4) for reducing the emission of pollutants contained in exhaust gas is disclosed. It comprises a frame and a stack (2) comprising a plurality of layers (20) of corrugated sheet material. The stack (2) is formed by alternately folding back and forth an unfolded strip (1). The unfolded strip (1) has a length (100) corresponding to the length (200) of the layers (20) and a width (101) corresponding to a multiple of the width (201) of the layers (20). The corrugations (10) of the unfolded strip (1) run in a direction including an angle (**α**) different from zero with the direction of the length (101) of the strip (1), so that after folding the strip (1) the corrugations of the adjacently arranged layers (20) come to lie on one another crossing each other at a crossing angle (**β**) which is twice as much as the angle (**α**). The folds (21) connecting the adjacently arranged layers are welded to the side walls (31, 33) of the frame along welding seams (40, 41).

## Description

The present invention deals with a unit for reducing the emission of pollutants contained in the exhaust gas of an internal combustion engine, in particular in the exhaust gas of an internal combustion engine of a motor vehicle, according to the preamble of the independent claim directed to such unit. The present invention further deals with a component for an exhaust system comprising such a unit, and with a method for manufacturing such a unit and component, respectively.

At least for some ten years the exhaust systems of motor vehicles, e.g. cars, comprise components for the catalytic conversion of exhaust gas, or to be more precise, of components of the exhaust gas. Also, for several years now the exhaust systems of Diesel engines are routinely equipped with particle filters for greatly reducing or preventing the emission of soot particles. For the sake of simplicity, in the following specification only the term 'exhaust gas' is used. Today, the afore-mentioned components are standard components of the exhaust gas systems of cars and other motor vehicles. They usually comprise a housing having an inlet for the exhaust gas to be treated and an outlet for the treated exhaust gas. The term "treated" in this respect stands for both for the catalytic treatment of components of the exhaust gas as well as the filtering out of particles such as soot. A converter for catalytic treatment of the exhaust gas on its way from the inlet to the outlet is arranged in the housing such that the exhaust gas has to pass through the converter in order to effect the treatment of the exhaust gas.

Many constructional solutions for both the catalytic converters themselves and the entire components for the exhaust systems have been devised since then. Also, many constructional solutions have been devised for particle filters, too. In the following, catalytic converters are discussed in particular, however, it should be pointed out that many considerations are similarly applicable to particle filters, in particular those regarding stability or other constructional aspects. A specific constructional solution for a catalyst body of a catalytic converter is described in GB-A-1 491 445. It is suggested in this reference to form a catalyst body comprising double layers of corrugated sheet material by folding an unfolded strip of such material to form double layers and then winding these double layers into a coil. The direction in which the corrugations of the unfolded strip are running includes an angle with the length of the strip, so that in each double layer the crests of the corrugations of one layer of each double layer come to lie across the crests of the other layer of each double layer. Also, it is suggested in GB-A-1 491 445 that instead of winding the folded double layer of strip into a coil one can fold the corrugated strip in a zig-zag manner. Hence, by folding a single layer of strip alternately back and forth a catalyst body comprising adjacently arranged layers is built up in which the crests of the corrugations of one layer come to lie across the crest of the layer of the adjacently arranged layer.

However, GB-A 1 491 445 is silent as to how such catalyst body can be mounted to a frame or housing to form a converter or a final component for the exhaust gas system of a motor vehicle, e.g. a car. At the time of the invention of the afore-described catalyst body and even in some constructional solutions of today, the catalyst body is wrapped into a so-called 'intumescent mat' which expands with raising temperatures of the exhaust gas stream, and the wrapped catalyst body was arranged in a housing. Thus, fixation of the catalyst body in the housing is achieved with the aid of the intumescent mat, which results in a comparatively loose seat of the wrapped catalyst body in the housing immediately after the cold start of the engine due to the comparatively low temperatures of the exhaust gas. As the engine and the exhaust gas warm up, the seat of the wrapped catalyst body in the housing gets very tight due to the expansion of the intumescent mat. This constructional approach suffers from several disadvantages. Firstly, a separate intumescent mat is needed, which is a component that cannot be neglected from the point of view of costs. Secondly, the outer dimensions of the catalyst body must be measured in order to determine a suitable length of the intumescent mat to be wrapped around the catalyst body so as to prevent the catalyst body from getting damaged by the expansion of the intumescent mat, since the catalyst body is a comparatively expensive piece.

Another constructional solution for such catalytic converter and component for an exhaust system comprising one or more such converters is described in EP-A-0 775 808. This reference discloses a catalytic converter in which individually cut corrugated sheets and flat sheets of a precious metal comprising a catalytically active coating are alternately arranged in a stack. The corrugations of the individual corrugated sheets are running in the direction of the length of the corrugated sheets. Between the corrugated sheets and the flat sheets small channels are formed through which the exhaust gas flows in operation. By contacting the catalytically active coating of the corrugated sheets and the flat plates the catalytic treatment of the exhaust gas is effected. The flat sheets are required in order to prevent that the corrugations of one corrugated sheet collapse in the corrugations of the next corrugated sheet. After the so formed stack of the alternately arranged corrugated and flat sheets is arranged in the housing, the sheets are welded to the housing from outside along two seams formed in each of the side walls of the housing.

While this constructional solution is a well-working solution, there is still room for further improvement. Firstly, two types of sheets - corrugated sheets and flat sheets - are required which must be individually cut to size and must be alternately arranged in a stack in a subsequent step. This renders the method of manufacturing more complicated. In addition, the channels formed between the corrugated sheets and the flat sheets run parallel to the flow of exhaust gas. This results in a reduced interaction with the catalytically active coating of the sheets.

In addition, in prior art exhaust systems of cars the components for the catalytic treatment of the exhaust gas were typically arranged under the floor of the car. Since the catalyzed chemical reactions only start above a certain threshold temperature, the temperature of the exhaust gas must rise above the threshold temperature. Accordingly, it takes a considerable period of time after the cold start of the engine until the catalyzed chemical reactions set in, that is to say until the catalytic treatment of the exhaust gas commences.

In view of the more and more severe legislation regarding emissions, it is necessary to place the components for the catalytic treatment of the exhaust gas closer to the engine in order to substantially reduce the time until the catalyzed chemical reactions set in, meaning that the period of time between the cold start of the engine and the point of time when the treatment of the exhaust gas commences is substantially shortened. However, as is also immediately evident, this imposes additional burdens on the components for the catalytic treatment, in particular the components must be more robust and withstand higher temperatures to achieve a long endurance. For example, one problem that may occur in this connection is related to the different thermal dilatation and the different compliances of the individual flat sheets and corrugated sheets. In case the converter heats up faster in the 'core' of the converter than in the frame (e.g. due to the chemical reactions, and due to the fact that the sheets are thin compared to the frame and thus have a lower thermal mass), so that the sheets want to expand more than the frame. The corrugated sheets which are very compliable will adapt the shape of the corrugation. However, the flat sheets cannot adapt and will buckle. This may lead to damage of the catalyst body

Accordingly, it is an object of the invention to provide a unit for reducing the emission of pollutants contained in the exhaust gas of an internal combustion engine, which is suitable for the catalytic treatment of the exhaust gas or for filtering out particles from the exhaust gas (such as soot particles in the exhaust gas of a Diesel engine). In particular, the unit should fulfil the afore-mentioned requirements, in particular those related to robustness and endurance, while at the same time complying with the severe legislation regarding emissions.

In accordance with the invention, this object is achieved by the unit for reducing the emission of pollutants contained in the exhaust gas of an internal combustion engine as it is specified in the independent claim directed to the unit. Advantageous embodiments of the unit according to the invention are the subject of the dependent claims directed to the unit. In accordance with the invention, the object is also achieved by a component for an exhaust system of an internal combustion engine as it is specified in the independent claim directed to such component. In particular, the component comprises at least one afore-mentioned unit according to the invention. Advantageous embodiments of the component for the exhaust system according to the invention are the subject of the respective dependent claims. Another aspect of the invention relates to a method of manufacturing the unit according to the invention, as it is specified in the independent claim directed thereto. Advantageous embodiments are the subject of the respective dependent claims. Still a further aspect of the invention relates to a method of manufacturing the component according to the invention, as it is specified in the independent claim directed thereto.

In particular, the unit for reducing the emission of pollutants in the exhaust gas of an internal combustion engine, in particular for the exhaust gas of an internal combustion engine of a motor vehicle, comprises a frame comprising two side walls, a top wall and a bottom wall. The unit further comprises a stack comprising a plurality of layers of corrugated sheet material arranged in the frame. Each layer of corrugated sheet material has a predetermined length and a predetermined width. The layers of corrugated sheet material are arranged in the frame such that the direction in which the corrugations are running allows the exhaust gas to flow through the stack. The layers of corrugated sheet material are welded to the side walls of the frame. The stack is formed by alternately folding back and forth an unfolded strip of corrugated sheet material, so that the layers of corrugated sheet material in the stack are arranged directly adjacent to one another with adjacently arranged layers being connected by a fold. The unfolded strip has a length corresponding to the predetermined length of the layers of the stack and has a width corresponding to a multiple of the predetermined width of the layers. The corrugations of the unfolded strip are running in a direction including an angle different from zero with the direction of the length of the strip. Accordingly, after alternately folding the unfolded strip back and forth along lines running in the direction of the length of the strip to form the stack the corrugations of the adjacently arranged layers come to lie on one another in a manner crossing each other at a crossing angle which is twice as much as the angle the corrugations include with the direction of the length of the unfolded strip. The folds connecting the adjacently arranged layers of the stack are welded to the side walls of the frame along welding seams.

The unit according to the invention can be used both as a particle filter and as a catalytic converter or in as combined catalytic converter/particle filter. In particular, it can be used in a component which can be arranged close to the engine and is capable of withstanding the additional burdens imposed on such component and converter, respectively. The unit and the component have a long endurance. The long endurance is achieved, among others, through the fact that adjacent layers of corrugated sheet material are connected to one another along the entire length of the layers by the fold. In addition, the layers are fixed to the frame by welding the folds to the side walls of the frame. Accordingly, the corrugated sheet material is fixed to the side walls along a distance (along the U-shaped profile of the fold) which is greater than the thickness of the individual sheets, as this is the case with the cut sheets shown in the afore-mentioned EP-A-0 775 808. This may be of particular interest for units comprising stacks the layers of which have only a comparatively short length. In case a weld may fail to fix a particular layer, the layer will be held in place by both the adjacent layer and the fold. Still further, due to the corrugations including an angle different from zero with the direction of length of the strip and due to the corrugations of adjacent layers crossing each other at a crossing angle which is twice as much as the angle the corrugations include with the direction of the length of the unfolded strip the exhaust gas has to pass a longer distance through the unit and the flow is much more complex, so that microturbulences may occur which improve the interaction with the catalytically active coating of the adjacent layers of the corrugated sheet material, so that overall the catalytic conversion rates are improved. Or, in case of a particle filter where the sheet material is a porous sheet material, such as e.g. a mesh, the turbulent flow goes through the porous sheet material thus retaining the particles therein. Such porous metallic material can be, for example, be mad from woven, non-woven or knitted metallic wires. Of course, it is also conceivable that the unit could be a combined catalytic converter / particle filter unit in which the corrugated sheet material may be porous and may have a catalytically active coating so that both functions the catalytic conversion as well as the filtering of particles may be performed in a single unit or component.

Moreover, the unit and the component according to the invention are simply to manufacture when compared to those shown in EP-A-0 775 808, since it is no longer required to provide flat and corrugated sheets which have been cut to size, but rather the unit may be made by folding back and forth single strips of one type of corrugated sheet material. Of course, it is possible to provide one or more stacks in one frame, each stack being made from a single strip by folding the unfolded strip back and forth as described above.

As already mentioned, in one embodiment of the unit according to the invention, a plurality of stacks are adjacently arranged within the frame, each of the stacks being formed from a separate unfolded strip. Depending on the required size of the respective unit it may be more suitable to form a plurality of stacks and to arrange them in the frame prior to welding than to provide and handle an overly long strip.

In a further embodiment of the unit according to the invention, the unfolded strip of corrugated sheet material comprises non-corrugated portions arranged between corrugated portions of the unfolded strip when viewed in the direction of the length of the unfolded strip. These non-corrugated portions of the unfolded strip are arranged at locations where the unfolded strip is folded back and forth. Upon folding these non-corrugated portions form non-corrugated folds connecting the adjacently arranged corrugated layers of the stack. These non-corrugated portions are then welded to the side walls of the frame along the welding seams. Due to these portions being non-corrugated the quality of the welds are further improved, so that any unwanted "bypass flows" of exhaust gases which may occur in cases where the folds are not absolutely gas-tightly welded to the side walls of the frame can be completely eliminated. In this respect, it is to be noted that the term "non-corrugated portions" is meant to include also portions having corrugations or deformations which have substantially smaller amplitudes than the corrugations of the corrugated portions so that the effect of improving the quality of the welds is also achieved.

In a further embodiment of the unit according to the invention, the thickness of the corrugated sheet material of the strip is in the range of 10 **µ**m to 100 **µ**m, and in particular the thickness is about 50 **µ**m or 25 **µ**m. These thicknesses are suitable to perform the folding operations.

In a further embodiment of the unit according to the invention, the frame has a rectangular profile and comprises two L-profiled frame elements with one of the L-profiled frame elements being arranged inverted, so that one of the L-shaped frame elements comprises the top wall and one side wall of the frame while the other L-shaped frame element comprises the bottom wall an the other side wall of the frame, and wherein the two L-shaped frame elements are welded to one another at the junction of the one side wall of the one L-shaped frame element to the bottom wall of the other L-shaped frame element and at the junction of the other side wall of the other frame element and the top wall of the one frame element. This is an embodiment that can be easily manufactured by either first welding the two L-profiled frame elements at the junctions to form the frame, then inserting the at least one stack of folded corrugated sheet material, and then welding the folds connecting the adjacent layers of the stack to the side walls of the frame, or by first placing the at least one stack of folded corrugated sheet material onto the bottom wall of the one L-shaped component, then fitting the other L-shaped component inversely thereto, then welding the L-profiled elements at the junctions to form the frame, and finally welding the folds connecting the adjacent layers of the stack to the side walls of the frame. It is to be understood that the "rectangular profile" of the frame also includes a square profile of the frame which is a particular case of a rectangle having four sides of equal length.

Alternatively, the frame may have a rectangular profile (again including square profiles) and comprises a U-profiled frame element and a plate element, with the U-profiled frame element comprising the bottom wall and the two side walls of the frame while the plate element forms the top wall. The U-profiled element and the plate element are welded to one another at the junctions between the plate and the two side walls. This is a pratical alternative from a manufacturing point of view in that the stack or stacks of folded corrugated sheet material can be inserted into the U-profiled frame element, then the plate element can be placed on top of the upper ends of the side walls of the U-profiled element, and finally the plate element and the U-profiled element can be welded to one another at the junctions. After that, the welding of the folds connecting the adjacent layers of the stack to the frame can be performed.

While it is generally conceivable that the folds are welded to the side walls along slanted lines, in a practical embodiment of the unit according to the invention the folds between the adjacently arranged layers are welded to each of the side walls of the frame along at least two welding seams, each welding seam extending in a direction essentially perpendicular to the adjacently arranged layers of the stack.

In a specific embodiment of the unit according to the invention, the sheet material is a porous material, in particular a screen, for retaining particles contained in the exhaust gas. This embodiment acts as a particle filter which can be used, for example, to retain soot particles contained in the exhaust gas of Diesel engines. Alternatively, the sheet material may be a catalytically active sheet material for catalytic treatment of noxious gaseous components contained in the exhaust gas. Such sheet material allows a catalytic conversion of the noxious gaseous components into innoxious gaseous components. Of course, as already mentioned further above, a combined catalytic converter/ particle filter unit is also conceivable. For that purpose, a porous corrugated sheet material having a catalytically active coating can be used, for example. As already mentioned, the invention is not limited to the unit *per se,* but rather is also directed to a component for an exhaust system of an internal combustion engine, in particular for the exhaust system of an internal combustion engine of a motor vehicle. In particular, the component according to the invention comprises a housing having an inlet for exhaust gas containing an amount of pollutants to be reduced and an outlet for the exhaust gas containing only a reduced amount of pollutants. In addition, the component comprises at least one unit for reducing the emission of pollutants in the exhaust gas, the unit being arranged in the housing in a manner such that the exhaust gas must flow through the unit on its way from the inlet to the outlet. The at least one unit arranged in the housing is a unit according to the invention as described above. The term "at least one unit" includes a plurality of units which can be arranged either in series or parallel to one another with respect to the flow of the exhaust gas, which may together form a block. For example, with the aid of a parallel arrangement of a plurality of units a larger amount of exhaust gas can be treated at the same time. Also by way of example, with the aid of a series arrangement of a plurality of units (which may comprise different catalytically active coatings) different components of the exhaust gas can be treated by the various units arranged in series. Also, combinations of parallel and series arrangements of units are conceivable.

Another aspect of the invention relates to a method of manufacturing a unit according to the invention for reducing the emission of pollutants contained in the exhaust gas of an internal combustion engine as described above, in particular for the exhaust gas of an internal combustion engine of a motor vehicle. The method according to the invention comprises the steps of:
- providing a frame having two side walls, a top wall and a bottom wall;
- providing an unfolded strip of corrugated sheet material, the unfolded strip having a predetermined length and a predetermined width, with the corrugations of the unfolded strip running in a direction including an angle different from zero with the direction of the length of the unfolded strip;
- alternately folding the unfolded strip back and forth along lines running in the direction of the length of the strip to form a stack comprising a plurality of layers of the corrugated sheet material which are arranged directly adjacent to one another, with adjacently arranged layers being connected by a fold and with the corrugations of the adjacently arranged layers lying on one another in a manner crossing each other at a crossing angle which is twice as much as the angle the corrugations include with the length of the unfolded strip;
- arranging the stack in the frame; and
- welding the folds connecting the adjacently arranged layers of the stack to the side walls of the frame to form welding seams.

As can be seen, from a manufacturing point of view the expense is lower than the expense for manufacturing the described prior art units, and in addition it is possible to manufacture units according to the invention having the above-mentioned advantages over prior art units.

In one embodiment of the method according to the invention, a plurality of stacks are adjacently arranged within the frame, each of the stacks being formed from a separate unfolded strip, and wherein only subsequent thereto welding of the folds of all stacks to the frame to form the welding seams is performed.

In a further embodiment of the method according to the invention, a strip of corrugated sheet material is used having a thickness in the range of 10 **µ**m to 100 **µ**m, in particular sheet material having a thickness of about 50 **µ**m or 25 **µ**m.

In a still further embodiment of the method according to the invention, the step of providing a frame comprises:
- providing two L-profiled frame elements;
- arranging one of the L-profiled frame elements inverted, so that one of the L-shaped frame elements comprises the top wall and one side wall of the frame while the other L-shaped frame element comprises the bottom wall and the other side wall of the frame, and
- welding the two L-shaped frame elements to one another at the junction of the one side wall of the one L-shaped frame element to the bottom wall of the other L-shaped frame element and at the junction of the other side wall of the other frame element and the top wall of the one frame element to form the frame.

This embodiment allows to manufacture the unit according to the invention in the manner already described above.

Still a further aspect of the invention relates to a method of manufacturing a component according to the invention for an exhaust system of an internal combustion engine, in particular for the exhaust system of an internal combustion engine of a motor vehicle. The method of manufacturing the above-described component comprises:
- providing a housing having an inlet for exhaust gas containing an amount of pollutants to be reduced and an outlet for emitting exhaust gas containing only a reduced amount of pollutants;
- providing at least one unit for reducing the emission of pollutants contained in the exhaust gas;
- arranging the unit in the housing in a manner such that the exhaust gas must flow through the unit on its way from the inlet to the outlet,
wherein the step of providing the at least one unit for reducing the emission of pollutants contained in the exhaust gas comprises providing a unit according to the invention as described above.

Further advantageous aspects and embodiment of the invention will become apparent from the following description of embodiments of the invention with the aid of the drawings in which:
- Fig. 1: shows an embodiment of an unfolded strip of corrugated sheet material to be used for manufacturing a unit according to the instant invention;
- Fig. 2: shows the strip of corrugated sheet material of Fig. 1 partially folded back and forth;
- Fig. 3: shows the strip of corrugated sheet material of Fig. 1 near the end of the folding process;
- Fig. 4: shows the stack formed of the completely folded strip of Fig. 1;
- Fig. 5: shows two of the stacks shown in Fig. 4 nearly adjacently arranged to one another;
- Fig. 6: shows a plurality of sixteen stacks of Fig. 4 arranged adjacently one above the other (packed);
- Fig. 7: shows the plurality of stacks shown in Fig. 6 together with two L-profiled frame elements during assembly;
- Fig. 8: shows the plurality of stacks arranged in the frame formed from the L-profiled frame elements of Fig. 7 by welding the profiled elements at the junctions,
- Fig. 9: shows an embodiment of the unit according to the invention with the folds of adjacent layers being welded to the side walls of the frame along two vertically running welding seams;
- Fig. 10: shows the detail X of Fig. 9 showing the folds connecting the adjacent corrugated layers welded to the frame;
- Fig. 11: shows an embodiment of a component for an exhaust gas system according to the invention comprising a plurality of units according to the invention in the form of catalytic converters arranged in a radial flow configuration in a housing between the inlet and the outlet for the exhaust gas;
- Fig. 12: shows a top view of a part of a further embodiment of an unfolded strip having non-corrugated portions arranged between corrugated portions of the strip;
- Fig. 13: shows a side view of the unfolded strip of Fig. 12;
- Fig. 14: shows the detail XIV of Fig. 13 in an enlarged view;
- Fig. 15: shows a longitudinal section through a further embodiment of a component for an exhaust gas system according to the invention comprising two units in the form of catalytic converters arranged in an axial flow configuration in a housing between the inlet and the outlet for the exhaust gas; and
- Fig. 16: shows a front view of the component shown in Fig. 15.

While in the following only catalytic converters will be described as embodiments of the unit according to the invention, it is to be understood that it is also possible to manufacture particle filters in a similar manner. In the latter case, however, the corrugated sheet material is a porous material which must be capable of retaining particles, such as soot, contained in the exhaust gas. Also, combined catalytic converters/particle filters are intended to be comprised by the instant invention. For example, it is conceivable to use a porous corrugated sheet material, e.g. a mesh, which is provided with a catalytically active coating.

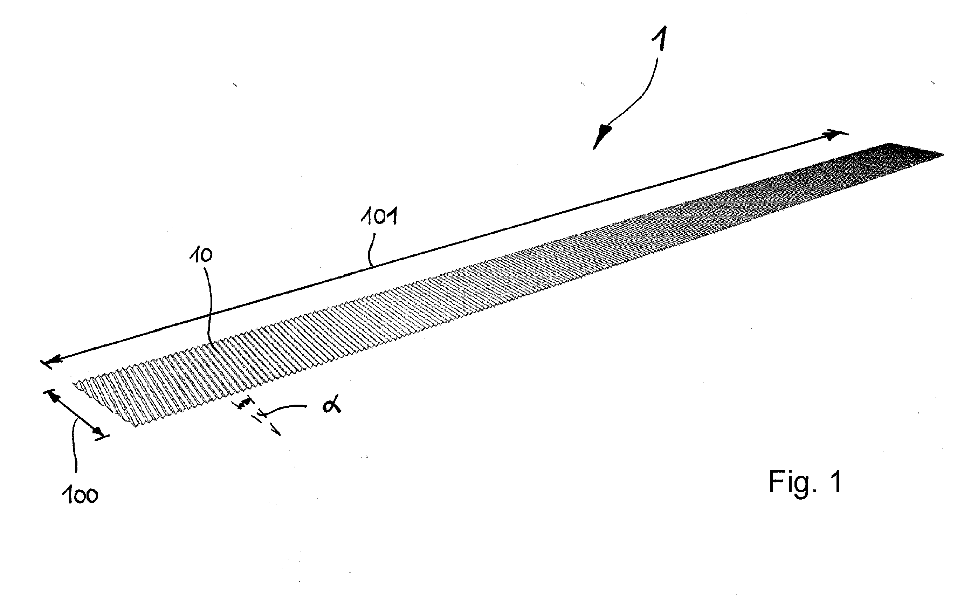

**Fig. 1** shows a strip 1 of corrugated sheet material from which the stack of a converter for the catalytic treatment of the exhaust gas is formed through folding in accordance with the present invention. The strip 1 is shown unfolded in Fig. 1. The corrugated sheet material may be made using rolling techniques, for example. As can be seen, the strip 1 has a length 100 and a width 101. The length 100 corresponds to the length of the layers of the stack to be formed while the width 101 of the unfolded strip 1 corresponds to a multiple of the width of the layers of the stack to be formed. In this respect, the term 'a multiple of the width of the layers of the stack' does not mean that the width of the layers of the stack must be multiplied with an integer to arrive at the overall width 100 the unfolded strip 1 must have. The folds must be considered as well when determining the required overall width 101 of the strip 1 of corrugated sheet material, and the more layers are formed from a single strip 1, the more the folds affects the required overall width 101 of the strip 1. As can be seen further from Fig. 1, the corrugations 10 of the unfolded strip 1 run in a direction that includes an angle α with the direction of the length 100 of the strip 1.

While the geometric shape of the corrugations is shown in the drawings as having an essentially triangular profile, it is to be noted that this profile has been chosen for illustration purposes only. While the geometric shape may indeed be triangular, a more conventional profile is a sine-shaped or similarly curved profile of the corrugations. Such a sine-shaped or similarly curved profile may be more advantageous with respect to thermal dilatation.

By way of example, the thickness of the corrugated sheet material of the strip 1 may be in the range of 10 µm to 100 **µ**m, and in particular the thickness is about 50 µm or 25 **µ**m. While 50 µm is a generally practical thickness for the sheet material, it is envisaged that even thinner sheet material may be used instead, in particular a sheet material having a thickness of about 25 **µ**m.

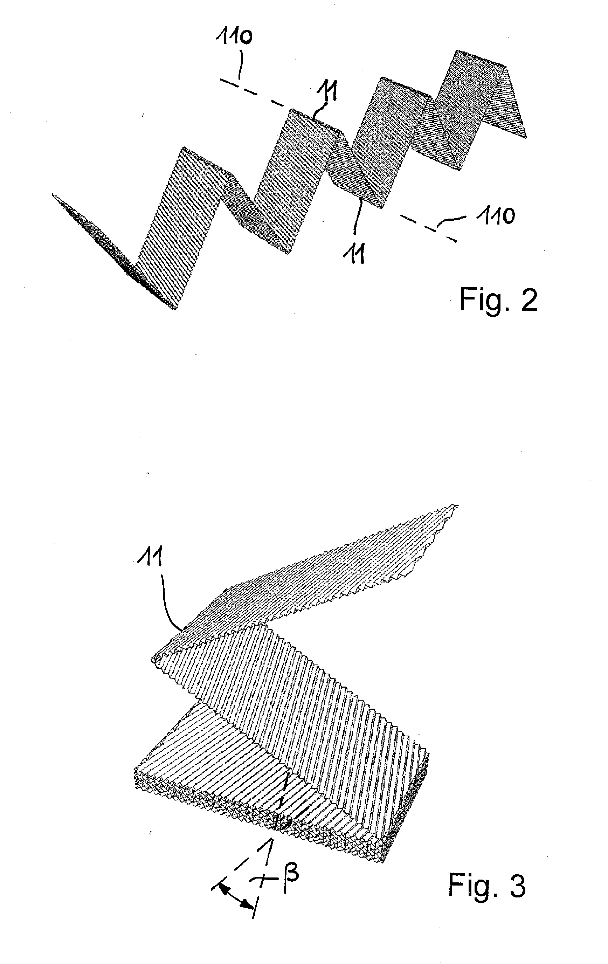

In the following, the folding steps are explained with the aid of **Fig. 2** and **Fig. 3** which show the strip 1 of Fig. 1 in different states of the folding process. From Fig. 2 it is evident that the strip 1 has been folded back and forth along lines 110 running perpendicular to the strip 1 so as to form folds 11. Thus, a plurality of layers is generated with the corrugations of adjacently arranged layers running in different directions so that they cross one another as they come to lie on one another. Since the corrugations of each layers alternately include the angle ±**α** with the length of the folded strip, the entire crossing angle **β** included by the corrugations of two adjacently arranged layers is **β** = 2**α**, that is to say the crossing angle is twice as much as the angle the corrugations 11 of the unfolded strip 1 include with the length of the unfolded strip 1. The fact, that the corrugations of adjacently arranged layers run in different directions can be better seen in Fig. 3 showing the strip in a state near the end of the folding process, so that one can already get an idea of the shape the stack to be formed will have.

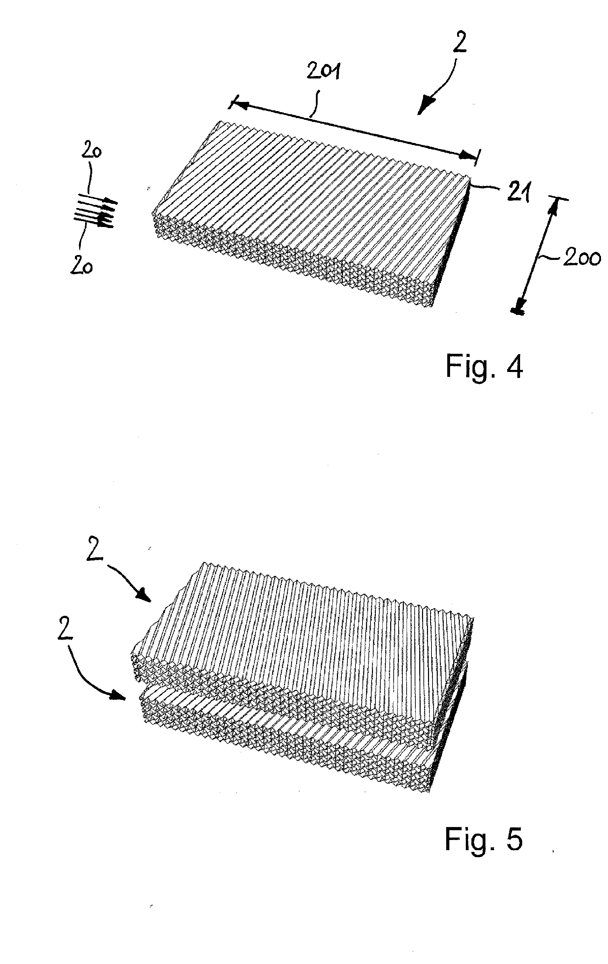

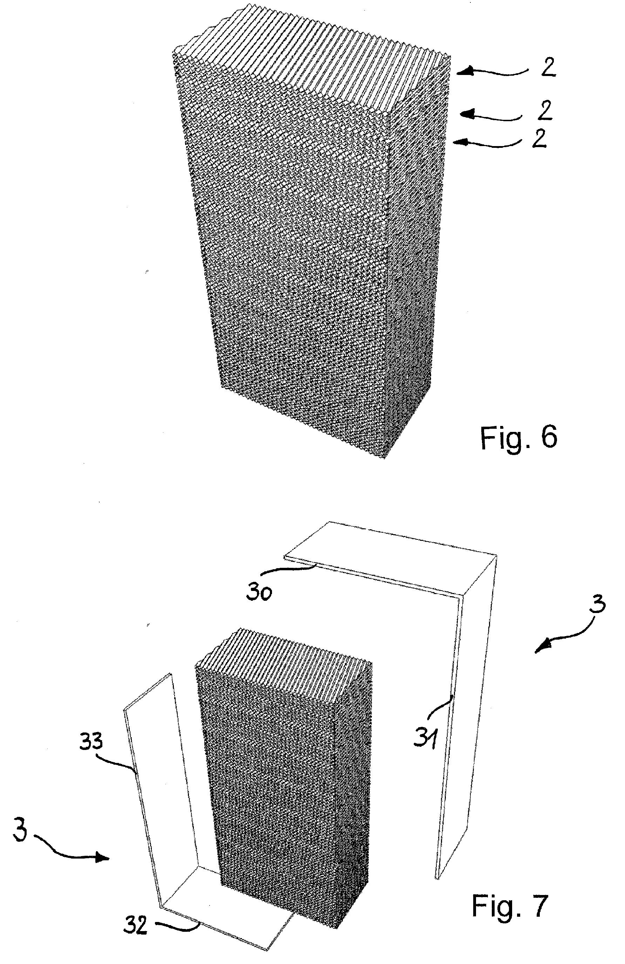

**Fig. 4** shows an embodiment of the stack 2 formed of the completely folded strip. The stack 2 comprises a plurality of adjacently arranged layers 20 of corrugated sheet material which have been formed by folding the strip 1 back and forth as has been explained above. Two adjacently arranged layers 20 are connected to one another by a respective fold 21 corresponding to the folds 11 shown in Fig. 2 and Fig. 3. The layers 20 have a length 200 and a width 201. The length 200 corresponds to the length 100 of the strip 1 (see Fig. 1). However, in contrast thereto, the width 201 of the layers of the stack 20 is only a part of the entire width 101 of the strip 1 in the unfolded step, as this has been explained above. As has also been explained above, the corrugations of adjacently arranged layers lie on one another including a crossing angle β that is twice as much as the angle α the corrugations of the unfolded strip 1 include with the direction of the length of the strip 1 (see explanations given above). **Fig. 5** shows two such stacks 2 arranged nearly adjacently to one another in order to illustrate that a plurality of such individual stacks can be adjacently arranged to form one definitive catalyst body of a catalytic converter. By way of example, **Fig. 6** shows an example of a plurality of sixteen stacks 2 which may together form one catalyst body of a catalytic converter.

**In** **Fig. 7** the sixteen stacks 2 of Fig. 6 are shown together with two L-profiled frame elements 3 during assembly. The two L-profiled frame elements 3 are arranged inverted so that one of them comprises the top wall 30 and one side wall 31 while the other of them comprises the bottom wall 32 and the other side wall 33. It goes without saying that other shapes of the frame elements are conceivable as well. By way of example only, one frame element may be a U-shaped element comprising the bottom wall and the two side walls of the frame, and the other frame element may be a plate element forming the top wall. The U-profiled element and the plate element are welded to one another at the junctions between the plate and the two side walls of the U-profiled element.

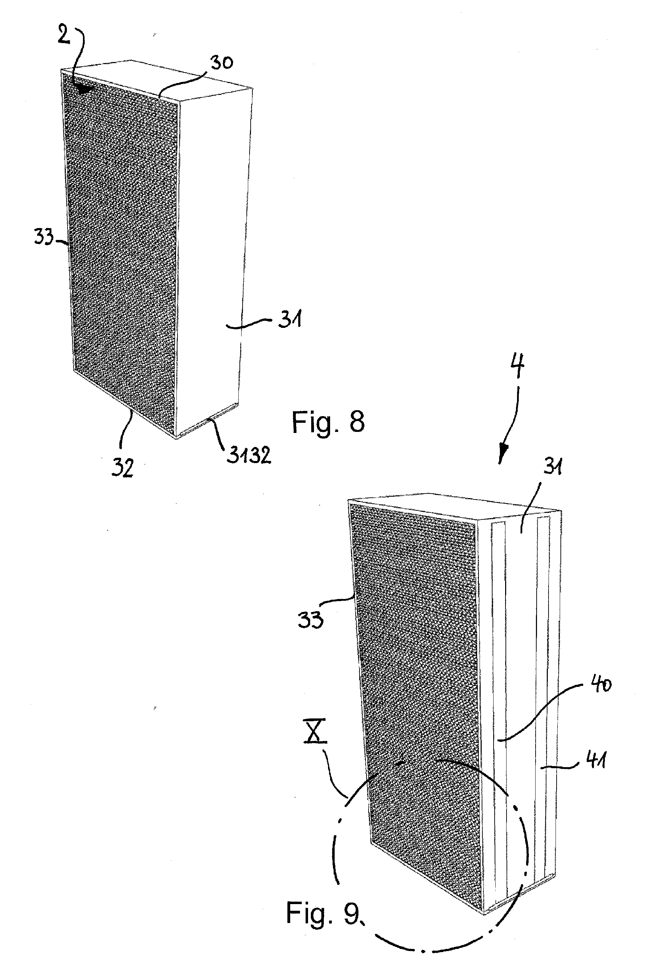

**Fig. 8** shows the assembled state of the plurality of stacks 2 and the L-profiled frame elements 3 shown in Fig. 7, with the L-profiled elements having been welded to one another at the junctions. One such junction - that one between side wall 31 and bottom wall 32 - can be seen in Fig. 8, with the welding seam 3132 being visible.

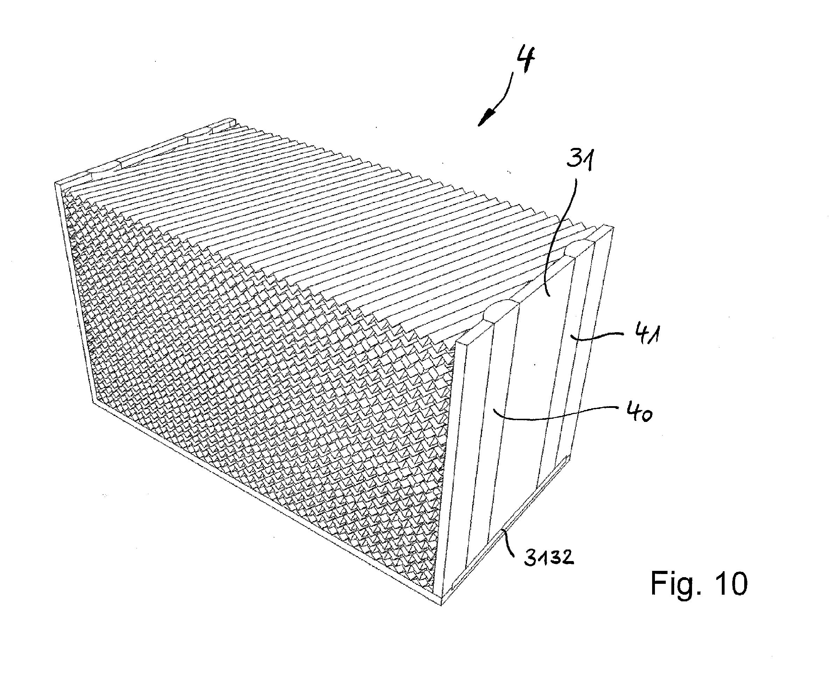

**Fig. 9** shows an embodiment of the converter 4 according to the invention with the folds 21 (see Fig. 4) of adjacent layers 2 being welded to the side walls 31 and 33 of the frame elements along welding seams along two vertically running welding seams 40 and 41 at each of the side walls 31 and 33, respectively (only side wall 31 visible in Fig. 9). **Fig. 10** representing the detail X of the converter 4 shown in Fig. 9 shows in an enlarged view the folds 21 (see Fig. 4) connecting the adjacent corrugated layers 20 of the stacks 2 being welded to the side walls 31 and 33 along the seams 40 and 41. From this enlarged view, it is apparent that adjacently arranged layers 20 are held in place both by the folds as well as by the welding seams 40 and 41.

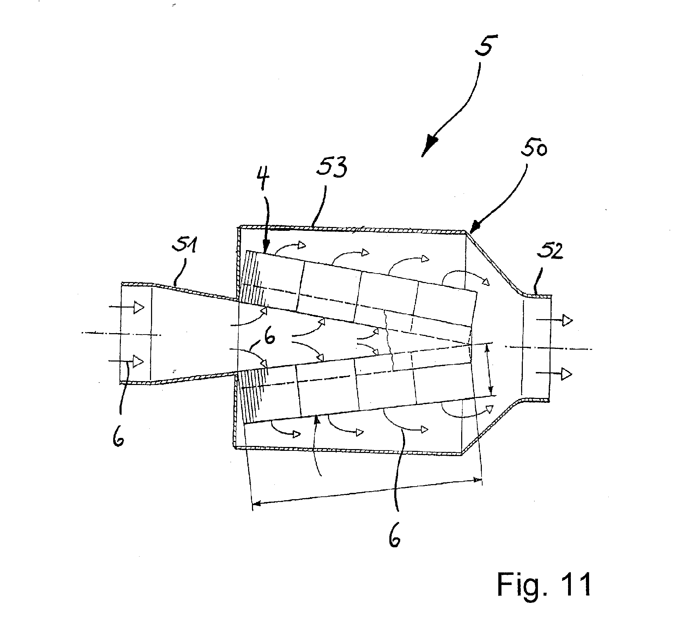

**Fig. 11** shows a component 5 for an exhaust system of a motor vehicle. Component 5 comprises a housing 50 having an inlet 51 for exhaust gas to be catalytically treated, and an outlet 52 for the catalytically treated exhaust gas. In the main body 53 of the housing 50 a plurality of converters 4 are arranged adjacent to one another. Each of the converters 4 may be embodied as a converter 4 described above, and four such converters 4 are arranged laterally adjacent to each other, with adjacently arranged converters 4 being fixedly connected to one another. The flow of the exhaust gas is indicated by the arrows 6. As the exhaust gas has entered the main body 53 of the housing 50 through the inlet 51, the exhaust gas must necessarily flow through the converters 4, since at the downstream end of the lines of converters 4 the exhaust gas is prevented from flowing directly through the outlet 52, but rather the exhaust gas must flow through the converters 4 where the catalytic treatment occurs.

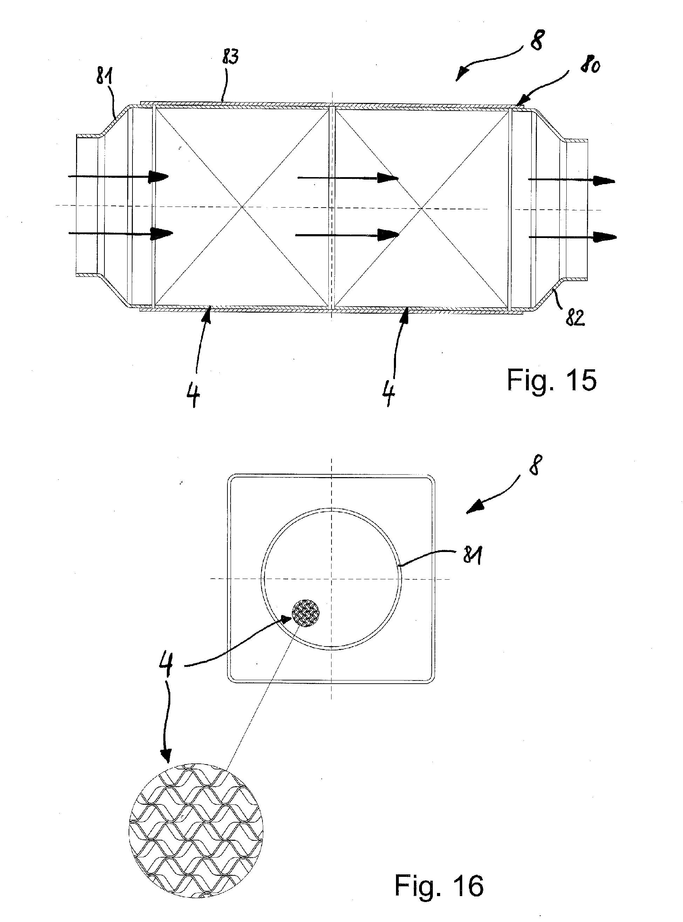

**Fig. 15** shows a longitudinal section and **Fig. 16** shows a front view of a further embodiment of a component 8 for an exhaust system of a motor vehicle. Component 8 comprises a housing 80 having an inlet 81 (inlet cone) for exhaust gas to be catalytically treated, and an outlet 82 (outlet cone) for the catalytically treated exhaust gas. In the main body 83 of the housing 80 two converters 4 are arranged adjacent to one another in a manner such that the exhaust gas flows essentially axially through the first converter 4 and thereafter through the second converter 4. By way of example, the stack or stacks of each of the converters 4 in this embodiment is/are folded from one or more strips such that the stack or the assembled stacks in the frame have a square front face (rather than having a rectangular front face with different dimensions as shown in Fig. 8 or Fig. 9) through which the exhaust gas flows. These square dimensions can be seen in Fig. 16. In addition, the length of the layers of the stack or stacks in the axial flow direction may be the same as the width and the height of the stack or assembled stacks so that the entire converter 4 has the shape of a cube. It goes without saying, however, that the converter 4 may have the shape of a cuboid with different dimensions as well. The exhaust gas flowing through the inlet 81 of the component 8 flows essentially axially (the overall flow direction is axial, as indicated by the arrows, while the flow may be diverted from the axial direction within the respective converter 4 with the aid of the corrugations) through the converters and through the outlet 82. While in Fig. 15 two such converters 4 are shown axially arranged one after the other, it goes without saying that a higher number of converters can be provided within the housing 80 of a component 8. Also, only one single converter can be arranged in the housing. In Fig. 16 only a cut-out portion of the converter 4 is shown but in addition this cut-out portion is shown enlarged, and from this enlarged representation of the cut-out portion the layers of the folded corrugated sheet material can be perfectly seen.

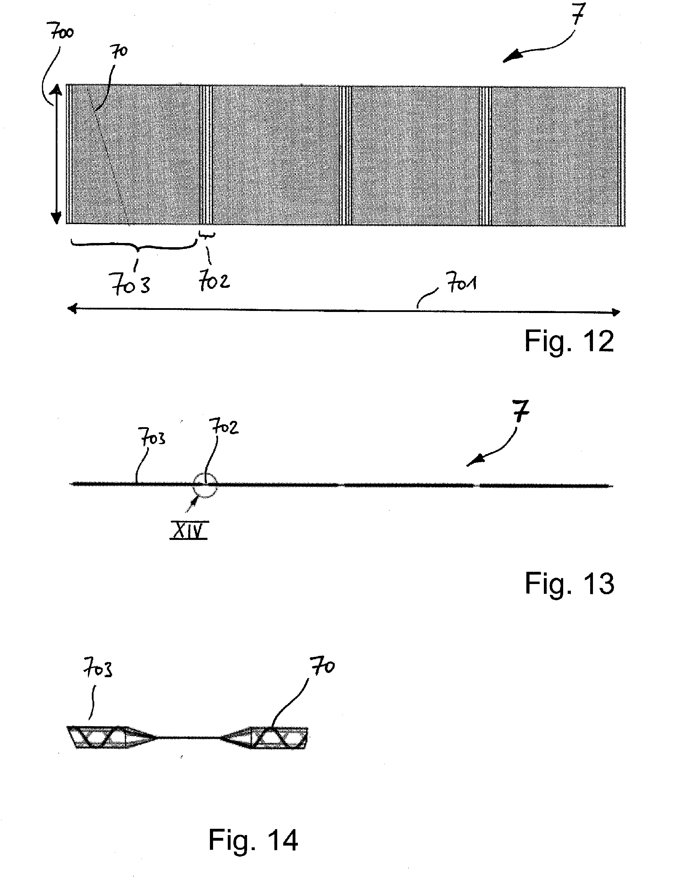

A further embodiment of an unfolded strip 7 is shown in **Fig. 12****.** As can be seen, in this embodiment the unfolded strip 7 comprises portions having corrugations 70 similar to the afore-described embodiment. However, different from the afore-described embodiment of Fig. 1, the unfolded strip 7 shown in Fig. 12 comprises non-corrugated portions 702 which are arranged between corrugated portions 703. Again, the entire unfolded strip 7 has a length 701 and a width 700, similar to the embodiment shown in Fig. 1.

This is even more evident from **Fig. 13** showing a side view of the strip of Fig. 12. This side view particularly shows the "envelope" of the corrugations at the corrugated portions 702, the material of the strip is not thicker in the corrugated portions 702 than in the non-corrugated portions 703. This also holds for detail XIV shown in **Fig. 14****,** this detail showing a non-corrugated portion 702 at the transition between two adjacently arranged corrugated portions 703 of the strip 7 in an enlarged view. These non-corrugated portions 702 of the strip 7 are to form the folds as the strip 7 is folded back and forth to form the stack. Arrangement of the stack within the frame and the subsequent welding operation is performed in the manner described above. Due to the fact, that there are no corrugations at the folds the quality of the connection is improved due to the folds being less prone to not being properly welded to the frame along the seams.

While only specific embodiments of the invention have been described by way of example with the aid of the drawings, it is obvious to the person skilled in the art that various modifications and changes are conceivable without departing from the spirit of the invention. By way of example only, the catalytically active sheet material may be a porous material, in particular it may be a screen, so that the sheet material does not only perform the catalytic function but also may retain particles (e.g. soot). Also, the corrugated sheet material may be an (uncoated) mesh so as to form a particle filter only. Therefore, the invention is not intended to be limited by the embodiments described in detail, but rather the scope of protection is defined by the appended claims.

## Claims

1. Unit (4) for reducing the emission of pollutants contained in the exhaust gas of an internal combustion engine, in particular in the exhaust gas of an internal combustion engine of a motor vehicle, the unit comprising:
- a frame comprising two side walls (31, 33), a top wall (30) and a bottom wall (32);
- a stack (2) comprising a plurality of layers (20) of corrugated sheet material arranged in the frame, each layer (20) of corrugated sheet material having a predetermined length (200) and a predetermined width (201), with the layers (20) of corrugated sheet material being arranged in the frame such that the direction in which the corrugations are running allows the exhaust gas to flow through the stack (2), and with the layers (20) of corrugated sheet material being welded to the side walls (31, 33) of the frame,
**characterized in that**
the stack (2) is formed by alternately folding back and forth an unfolded strip (1; 7) of corrugated sheet material, so that the layers (20) of corrugated sheet material in the stack are arranged directly adjacent to one another with adjacently arranged layers being connected by a fold (21), the unfolded strip (1; 7) having a length (100; 700) corresponding to the predetermined length (200) of the layers (20) of the stack (2) and having a width (101; 701) corresponding to a multiple of the predetermined width (201) of the layers (20), and the corrugations (10; 70) of the unfolded strip (1; 7) running in a direction including an angle (**α**) different from zero with the direction of the length (101; 701) of the strip (1; 7), so that after alternately folding the unfolded strip (1) back and forth along lines (110) running in the direction of the length (101; 701) of the strip (1; 7) to form the stack (2) the corrugations of the adjacently arranged layers (20) come to lie on one another in a manner crossing each other at a crossing angle (**β**) which is twice as much as the angle (**α**) the corrugations include with the direction of the length (101; 701) of the unfolded strip (1; 7), and wherein the folds (21) connecting the adjacently arranged layers of the stack (2) are welded to the side walls (31, 33) of the frame along welding seams (40, 41).

2. Unit according to claim 1, wherein a plurality of stacks (2) are adjacently arranged within the frame, each of the stacks being formed from a separate unfolded strip (1; 7).

3. Unit according to any one of claims 1 or 2, wherein the unfolded strip (7) of corrugated sheet material comprises non-corrugated portions (702) arranged between corrugated portions (703) of the unfolded strip (7) when viewed in the direction of the length (701) of the unfolded strip (7), the non-corrugated portions (702) of the unfolded strip (7) being arranged at locations where the unfolded strip (7) is folded back and forth so as to form non-corrugated folds (21) connecting the adjacently arranged corrugated layers (20) of the stack (2).

4. Unit according to any one of the preceding claims, wherein the thickness of the corrugated sheet material of the strip (1; 7) is in the range of 10 µm to 100 µm, and in particular the thickness is about 50 µm or 25 µm.

5. Unit according to any one of the preceding claims, wherein the frame has a rectangular profile and comprises two L-profiled frame elements (3) with one of the L-profiled frame elements (3) being arranged inverted, so that one of the L-shaped frame elements (3) comprises the top wall (30) and one side wall (31) of the frame while the other L-shaped frame element (3) comprises the bottom wall (32) an the other side wall (33) of the frame, and wherein the two L-shaped frame elements (3) are welded to one another at the junction of the one side wall (31) of the one L-shaped frame element to the bottom wall (32) of the other L-shaped frame element and at the junction of the other side wall (33) of the other frame element and the top wall (30) of the one frame element.

6. Unit according to any one of claims 1 to 4, wherein the frame has a rectangular profile and comprises a U-profiled frame element and a plate element, with the U-profiled frame element comprising the bottom wall and the two side walls of the frame and the plate element forming the top wall, and wherein the U-profiled element and the plate element are welded to one another at the junctions between the plate and the two side walls of the U-profiled element.

7. Unit according to any one of the preceding claims, wherein the folds (21) between the adjacently arranged layers (20) are welded to each of the side walls (31, 33) of the frame along at least two welding seams (40, 41), each welding seam (40, 41) extending in a direction essentially perpendicular to the adjacently arranged layers (20) of the stack (2).

8. Unit according to any one of the preceding claims, wherein the sheet material is a porous material, in particular a screen, for retaining particles contained in the exhaust gas.

9. Unit according to any one of the preceding claims, wherein the sheet material is a catalytically active sheet material for catalytic treatment of noxious gaseous components contained in the exhaust gas.

10. Component (5; 8) for an exhaust system of an internal combustion engine, in particular for the exhaust system of an internal combustion engine of a motor vehicle, the component comprising:
- a housing (50; 80) having an inlet (51; 81) for exhaust gas containing an amount of pollutants to be reduced and an outlet (52; 82) for emitting exhaust gas containing only a reduced amount of pollutants ;
- at least one unit (4) for reducing the emission of pollutants in the exhaust gas, the unit (4) being arranged in the housing (50; 80) in a manner such that the exhaust gas must flow through the unit (4) on its way from the inlet (51; 81) to the outlet (52; 82),
**characterized in that**
the at least one unit (4) arranged in the housing (50; 80) is a unit (4) according to any one of the preceding claims.

11. Method of manufacturing a unit (4) for reducing the emission of pollutants contained in the exhaust gas of an internal combustion engine according to any one of claims 1 to 9, in particular in the exhaust gas of an internal combustion engine of a motor vehicle, the method comprising the steps of:
- providing a frame having two side walls (31, 33), a top wall (30) and a bottom wall (32);
- providing an unfolded strip (1; 7) of corrugated sheet material, the unfolded strip having a predetermined length (100; 700) and a predetermined width (101; 701), with the corrugations (10; 70) of the unfolded strip (1; 7) running in a direction including an angle (**α**) different from zero with the direction of the length (100; 700) of the unfolded strip (1; 7);
- alternately folding the unfolded strip (1; 7) back and forth along lines (110) running in the direction of the length (100; 700) of the strip (1; 7) to form a stack (2) comprising a plurality of layers (20) of the corrugated sheet material which are arranged directly adjacent to one another, with adjacently arranged layers (20) being connected by a fold (21) and with the corrugations of the adjacently arranged layers (20) lying on one another in a manner crossing each other at a crossing angle (**β**) which is twice as much as the angle (**α**) the corrugations include with the length (100; 700) of the unfolded strip (1; 7);
- arranging the stack (2) in the frame; and
- welding the folds (21) connecting the adjacently arranged layers (20) of the stack (2) to the side walls (31, 33) of the frame to form welding seams (40, 41).

12. Method according to claim 11, wherein a plurality of stacks (2) are adjacently arranged within the frame, each of the stacks (2) being formed from a separate unfolded strip (1; 7), and wherein only subsequent thereto welding of the folds (21) of all stacks (2) to the frame to form the welding seams (40, 41) is performed.

13. Method according to any one of claims 11 or 12, wherein a strip (1; 7) of corrugated sheet material is used having a thickness in the range of 10 **µ**m to 100 **µ**m, in particular sheet material having a thickness of about 50 **µ**m or 25 **µ**m.

14. Method according to any one of claims 11 to 13, wherein the step of providing a frame comprises:
- providing two L-profiled frame elements (3);
- arranging one of the L-profiled frame elements (3) inverted, so that one of the L-shaped frame elements (3) comprises the top wall (30) and one side wall (31) of the frame while the other L-shaped frame element (3) comprises the bottom wall (32) and the other side wall (33) of the frame, and
- welding the two L-shaped frame elements (3) to one another at the junction (3132) of the one side wall (31) of the one L-shaped frame element (3) to the bottom wall (32) of the other L-shaped frame element (3) and at the junction of the other side wall (33) of the other frame element and the top wall (30) of the one frame element to form the frame.

15. Method of manufacturing a component (5; 8) for an exhaust system of an internal combustion engine according to claim 10, in particular for the exhaust system of an internal combustion engine of a motor vehicle, the method comprising:
- providing a housing (50; 80) having an inlet (51; 81) for exhaust gas containing an amount of pollutants to be reduced and an outlet (52; 82) for emitting exhaust gas containing only a reduced amount of pollutants;
- providing at least one unit (4) for reducing the emission of pollutants contained in the exhaust gas;
- arranging the unit (4) in the housing (50; 80) in a manner such that the exhaust gas must flow through the unit (4) on its way from the inlet (51; 81) to the outlet (52; 82),
wherein the step of providing the at least one unit (4) for reducing the emission of pollutants contained in the exhaust gas comprises providing a unit (4) according to any one of claims 1 to 9.
